(19) Europäisches Patentamt / European Patent Office / Office européen des brevets

(11) **EP 4 357 959 A1**

(12) **EUROPEAN PATENT APPLICATION**

(43) Date of publication:
**24.04.2024 Bulletin 2024/17**

(21) Application number: **23182265.1**

(22) Date of filing: **29.06.2023**

(51) International Patent Classification (IPC):
**G06F 30/10** *(2020.01)* **G06F 30/27** *(2020.01)*

(52) Cooperative Patent Classification (CPC):
**G06F 30/10; G06F 30/27;** G06F 2111/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 JP 2022166472**

(71) Applicant: **FUJITSU LIMITED**
**Kawasaki-shi, Kanagawa 211-8588 (JP)**

(72) Inventors:
• **MARUO, Akito**
  **Kawasaki-shi, Kanagawa, 211-8588 (JP)**
• **JIPPO, Hideyuki**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION PROGRAM, METHOD FOR OPTIMIZATION, AND INFORMATION PROCESSING APPARATUS**

(57) An optimization program that causes at least one computer to execute a process, the process includes setting, for a region of a design target, a plurality of Gaussian functions as basis functions of a shape function that corresponds to a shape of a design target item in the region; and identifying the shape of the design target item indicated by the shape function obtained by combining the plurality of Gaussian functions identified to be disposed by identifying whether to dispose the plurality of Gaussian functions.

FIG. 1

EP 4 357 959 A1

**Description**

FIELD

The embodiment discussed herein is related to an optimization program, a method for optimization, and an information processing apparatus.

BACKGROUND

Hitherto, in optimization of a product shape in computer aided engineering (CAE), topology optimization using annealing such as a digital annealer (DA) has been known. In this topology optimization, bits are assigned to CAE meshes in a design region that determines the shape of a product, and whether a material is disposed in the individual CAE meshes is represented by a value ("1" or "0") of the bit. When the value of each bit that maximizes (or minimizes) the value of the objective function (also referred to as an evaluation function) is obtained by using annealing, the shape of the product is optimized.

Japanese Laid-open Patent Publication No. 2022-68606 is disclosed as related art.

[TECHNICAL PROBLEM]

However, according to the above-described related art, when the meshes of the CAE are made to be finer to increase a CAE scale in order to increase accuracy, the number of bits to be used becomes enormous. Thus, there is a problem in that efficient performance of the topology optimization is difficult. For example, when the number of bits is enormous, convergence of a solution at the time of annealing degrades, and it is difficult to obtain a good solution without increasing the number of trials. Also, a checkerboard problem in which a shape formed by discretely disposing the material in the design region is obtained as an optimum shape may occur in some cases.

In one aspect, an object is to provide an optimization program, a method for optimization, and an information processing apparatus that may efficiently optimize a shape.

[SOLUTION TO PROBLEM]

According to an aspect of the embodiments, an optimization program that causes at least one computer to execute a process, the process includes setting, for a region of a design target, a plurality of Gaussian functions as basis functions of a shape function that corresponds to a shape of a design target item in the region; and identifying the shape of the design target item indicated by the shape function obtained by combining the plurality of Gaussian functions identified to be disposed by identifying whether to dispose the plurality of Gaussian functions.

[ADVANTAGEOUS EFFECTS OF INVENTION]

The shape may be efficiently optimized.

BRIEF DESCRIPTION OF DRAWINGS

FIG. 1 is a block diagram illustrating an example of a hardware configuration of an information processing apparatus according to an embodiment;

FIG. 2 is a block diagram illustrating an example of a functional configuration of the information processing apparatus according to the embodiment;

FIG. 3 is an explanatory diagram explaining an overview of region setting in the information processing apparatus according to the embodiment;

FIG. 4 is an explanatory diagram explaining an overview of shape determination in the information processing apparatus according to the embodiment;

FIG. 5A is a flowchart illustrating an example of operation of the information processing apparatus according to the embodiment;

FIG. 5B is a flowchart illustrating the example of the operation of the information processing apparatus according to the embodiment;

FIG. 6 is an explanatory diagram explaining results of the related art and embodiment examples;

FIG. 7 is an explanatory diagram explaining the results of the related art and embodiment examples; and

FIG. 8 is an explanatory diagram explaining the results of the related art and embodiment examples.

DESCRIPTION OF EMBODIMENTS

An optimization program, a method for optimization, and an information processing apparatus according to an embodiment will be described below with reference to the drawings. In the embodiment, configurations having the same functions are denoted by the same reference numerals, thereby redundant description thereof is omitted. The optimization program, the method for optimization, and the information processing apparatus described in the embodiment below are merely exemplary. The optimization program, the method for optimization, or the information processing apparatus does not limit the embodiment. Portions of the embodiment below may be appropriately combined as long as the portions of the embodiment do not contradict each other.

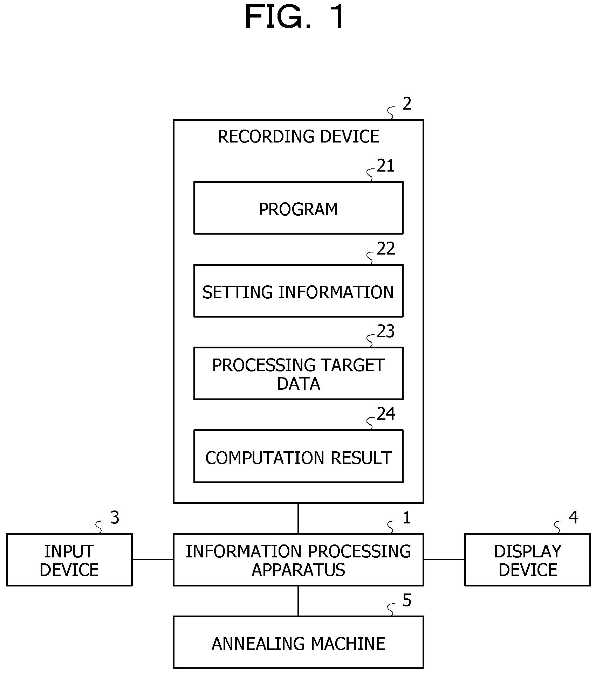

FIG. 1 is a block diagram illustrating an example of a hardware configuration of the information processing apparatus according to the embodiment. As illustrated in FIG. 1, an information processing apparatus 1 is coupled to a recording device 2, an input device 3, a display device 4, and an annealing machine 5 via a communication line such as a Universal Serial Bus (USB). For example, a personal computer (PC) or the like may be applied to the information processing apparatus 1.

The recording device 2 is, for example, a hard disk drive (HDD), a solidstate drive (SSD), or the like. The recording device 2 stores a program 21, setting information 22, processing target data 23, a computation result 24, and so forth.

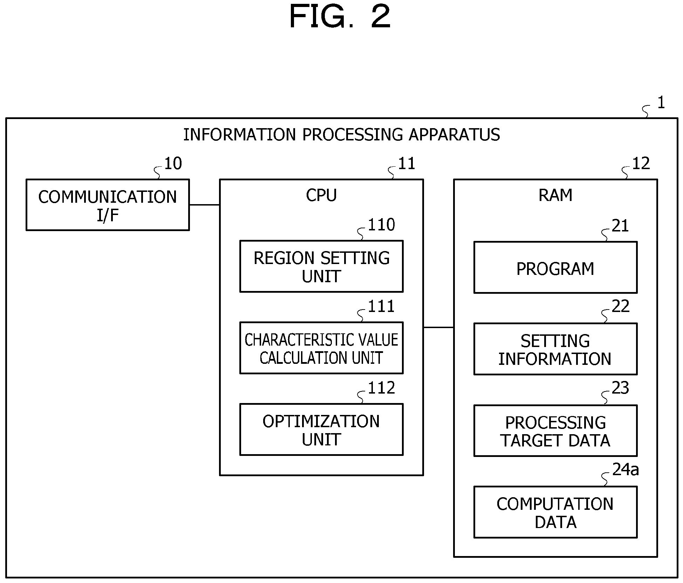

The program 21 is program data that provides various functions in the information processing apparatus 1 when the program 21 is read and executed by a central processing unit (CPU) 11 (see FIG. 2) of the information processing apparatus 1.

The setting information 22 is data in which various types of setting content when the CPU 11 of the information processing apparatus 1 executes the program 21 are described. The processing target data 23 is data to be optimized in the information processing apparatus 1. For example, the processing target data 23 includes setting conditions related to an optimization problem such as an objective function and a variable definition for, for example, a design region that determines the shape of a product. The computation result 24 is data obtained by an optimization process of the information processing apparatus 1 based on the processing target data 23. For example, the computation result 24 is data indicating the shape in the design region and the like.

The input device 3 is a device that accepts data input from a user. For example, a keyboard, a mouse, or the like may be applied to the input device 3 and receives input of an instruction, information, and the like from a user. The display device 4 is a display that displays processing results and the like of the information processing apparatus 1. For example, a liquid crystal display (LCD) or the like may be applied to the display device 4.

The annealing machine 5 is a computation device that processes a combinatorial optimization problem such as a quadratic unconstrained binary optimization (QUBO) at high speed under instructions from the information processing apparatus 1. Any computation device that is capable of solving the QUBO or the like such as a digital annealer (DA), simulated annealing (SA), quantum annealing (QA), or an Ising machine may be applied to the annealing machine 5. For example, upon receiving a parameter (initial value) to be set for an objective function from the information processing apparatus 1, the annealing machine 5 obtains an annealing solution based on the Ising model such that the value of the objective function approaches an optimum value. The annealing machine 5 outputs the annealing solution obtained as described above to the information processing apparatus 1.

FIG. 2 is a block diagram illustrating an example of a functional configuration of the information processing apparatus 1 according to the embodiment. As illustrated in FIG. 2, the information processing apparatus 1 includes a communication interface (I/F) 10, the CPU 11, and a random-access memory (RAM) 12.

The communication I/F 10 is a communication interface that is coupled to an external apparatus or the like in a wired or wireless manner and that transmits and receives data to and from the external apparatus or the like under the control of the CPU 11. For example, the communication I/F 10 transmits and receives the data to and from the recording device 2, the input device 3, the display device 4, and the annealing machine 5 that are coupled to the communication I/F 10 via the communication line such as the USB.

The CPU 11 loads the program 21 read from the recording device 2 via the communication I/F 10 into the RAM 12 and sequentially executes the program 21, thereby centrally controlling operation of the information processing apparatus 1. For example, the CPU 11 has functions as a region setting unit 110, a characteristic value calculation unit 111, and an optimization unit 112 by executing the program 21.

The RAM 12 provides a work area for the CPU 11 to perform various types of processing. For example, the RAM 12 stores, so as to be writable and readable to and from the CPU 11, computation data 24a related to computation in progress and the computation result 24 obtained by the processing of the CPU 11 in addition to the program 21, the setting information 22, and the processing target data 23 read from the recording device 2 via the communication I/F 10.

The region setting unit 110 is a processing unit that sets a design region that determines the shape of a design target item. For example, the region setting unit 110 sets a plurality of Gaussian functions (hereafter referred to as Gaussian basis functions) as basis functions of a shape function corresponding to the shape of the design target item for the design region designated by the coordinate information or the like in the variable definition included in the processing target data 23.

By normalizing and superposing (combining) the plurality of Gaussian basis functions set as described above, the information processing apparatus 1 expresses the shape function. An arbitrary function may be expressed by normalizing and superposing a plurality of Gaussian basis functions as described in (Document 1) and (Document 2) below.

(Document 1): T. Sato, K. Watanabe and H. Igarashi, "Multimaterial Topology Optimization of Electric Machines Based on Normalized Gaussian Network", IEEE Trans. Magn., vol. 51, no. 3, pp. 1-4, March 2015.

(Document 2): Y. Otomo and H. Igarashi, "A 3-D Topology Optimization of Magnetic Cores for Wireless Power Transfer Device", IEEE Trans. Magn., vol. 55, no. 6, pp. 1-5, June 2019.

As described above, in the information processing apparatus 1, instead of giving an on/off state (whether the material is disposed) independently to CAE meshes, a physical property such as the presence/absence of a material is determined by output of a normalized Gaussian network (NGnet, corresponding to a shape function) the value of which smoothly changes spatially.

For example, the information processing apparatus 1 determines the physical property (presence or absence of the material or the like) of the design region based on the output of a shape function y (x, w) represented by Expression (1) below.

$$y(x, w) = \sum_{i=1}^{N_G} w_i \left\{ G_i(x) \Big/ \sum_{j=1}^{N_G} G_j(x) \right\} \qquad \cdots (1)$$

In Expression (1), $w_i$ represents a weight coefficient, x represents a position vector, $N_G$ represents the number of Gaussian basis functions, and $G_j(x)$ represents a jth Gaussian basis function. For example, based on the output of the shape function (y) represented by Expression (1), the information processing apparatus 1 determines that the material is present in a case where $y(x_e, w) \geq 0$ (< 0) is satisfied for material information of an element (e).

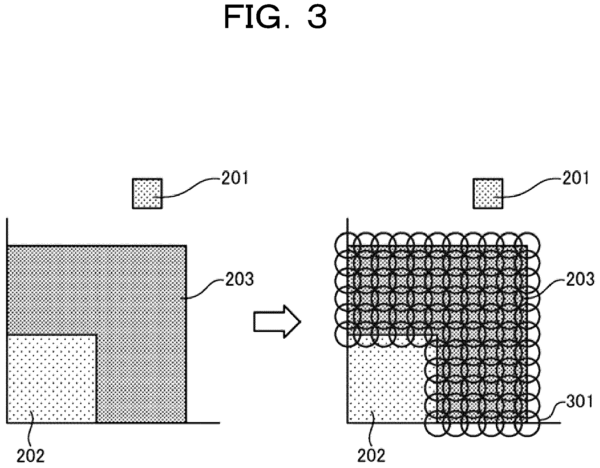

FIG. 3 is an explanatory diagram explaining an overview of region setting in the information processing apparatus 1 according to the embodiment. As illustrated in FIG. 3, it is assumed that, as an example, the information processing apparatus 1 optimizes the shape of a magnetic shield and obtains the shape of a magnetic body in a design region 203 so as to suppress leakage of a magnetic field (magnetic flux) generated from a coil 201 to a target region 202 with a smaller amount of magnetic body. For example, the user generates in advance a CAE model as illustrated on the left side of FIG. 3 as a model to be optimized and registers the CAE model as the processing target data 23.

As in (Document 1) and (Document 2), the region setting unit 110 sets a plurality of Gaussian basis functions 301 for the design region 203. For each of the plurality of Gaussian basis functions 301, the region setting unit 110 sets a Gaussian basis function assuming a negative value as well as a Gaussian basis function assuming a positive value. Accordingly, the output of the shape function obtained by combining the plurality of Gaussian basis functions 301 has a large oscillation width compared to the case where only the Gaussian basis functions assuming a positive value is set (output in the case where the positive and negative Gaussian basis functions superpose on each other is 0). The information processing apparatus 1 increases the oscillation width of the output of the shape function as described above so as to enable improvement of accuracy of the physical property based on the shape function.

The characteristic value calculation unit 111 is a processing unit that calculates a characteristic value corresponding to the shape (structure) based on the output of the shape function for the design region 203. For example, a CAE solver or the like corresponds to the characteristic value calculation unit 111. As an example, in the case of optimizing the shape of the magnetic shield, the characteristic value calculation unit 111 calculates, as the characteristic value, a magnetic body area corresponding to the shape of the magnetic body in the design region 203, an average magnetic flux density of a leakage magnetic field in the target region 202, or the like.

The optimization unit 112 is a processing unit that identifies (determines), by using the annealing machine 5, a shape that maximizes (or minimizes) the objective function as a disposition problem of the Gaussian basis functions 301 for the design region 203 in which the region setting unit 110 sets the plurality of Gaussian basis functions 301.

For example, the optimization unit 112 sets as the disposition problem of the positive and negative Gaussian basis functions 301 as represented by Expression (2) below and identifies the shape that maximizes (or minimizes) the objective function by annealing of the annealing machine 5.

$$y(x, s, z) = \sum_{i=1}^{N_G} s_i \left\{ G_i(x) \Big/ \sum_{j=1}^{N_G} G_j(x) \right\} - \sum_{i=1}^{N_G} z_i \left\{ G_i(x) \Big/ \sum_{j=1}^{N_G} G_j(x) \right\}$$

$$= \sum_{i=1}^{N_G} (s_i - z_i) \left\{ G_i(x) \Big/ \sum_{j=1}^{N_G} G_j(x) \right\}$$

$$\cdots (2)$$

Here, $s_i$ and $z_i \in \{0, 1\}$ in the shape function y (x, s, z) correspond to bits of the annealing. For example, $s_i$ is a bit indicating whether to dispose a Gaussian basis function of a positive value at the ith position, and $z_i$ is a bit indicating whether to dispose a Gaussian basis function of a negative value at the ith position.

For example, the optimization unit 112 randomly generates the bits of $s_i$ and $z_i$ to determine the disposition of the plurality of Gaussian basis functions 301 and obtains the shape function obtained by combining the disposed Gaussian basis functions 301. Next, based on the magnitude of the shape function (for example, the material is present when the function value > 0), the optimization unit 112 identifies the shape in the design region 203.

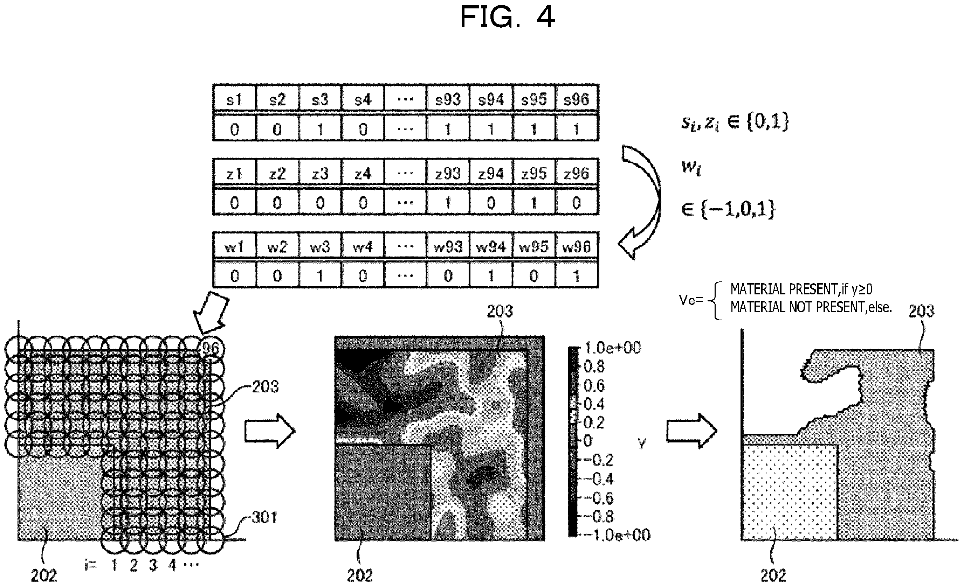

FIG. 4 is an explanatory diagram explaining an overview of shape determination in the information processing apparatus 1 according to the embodiment. As illustrated in FIG. 4, it is assumed that the Gaussian basis functions 301 are set at 96 positions (i = 1, 2, ..., 96) in the design region 203. The positive and negative Gaussian basis functions 301 ($s_i$, $z_i$) are set at each of the 96 positions. The weight coefficient ($w_i$) in the Gaussian basis functions 301 is a combination of $s_i$ and $z_i$ ($w_i \in \{-1, 0, 1\}$).

For the design region 203, the optimization unit 112 randomly determines the disposition of the Gaussian basis functions 301 to obtain a distribution of a value (y) of the shape function obtained by combining the disposed Gaussian basis functions 301. Next, based on the magnitude of the shape function, the optimization unit 112 identifies the material information ($V_e$) in the design region 203. For example, the optimization unit 112 sets the material information ($V_e$) as a magnetic body in a case where $y \geq 0$ is satisfied and air (or other) in the case where $y \geq 0$ is not satisfied.

Next, the optimization unit 112 uses the characteristic value calculation unit 111 to calculate the characteristic value related to the objective function. By repeatedly performing the above-described processing, the optimization unit 112 identifies the shape that maximizes (or minimizes) the objective function.

The optimization unit 112 may identify the shape that maximizes (or minimizes) the objective function not only by the above-described identification of the shape with the random search but also by a technique in which a scheme of a factorization. machine with quantum annealing (FMQA) is carried out by the DA (FM-DA).

Here, FM is an abbreviation of a Factorization Machine, and the scheme of the FMQA is as in (Document 3) below. Also, the FM is as in (Document 4) below.

(Document 3): K. Kitai et al., Phys. Rev. Research 2, 013319 (2020), https://doi.org/10.1103/PhysRevResearch.2.013319

(Document 4): S. Rendle, "Factorization Machines", 2010 IEEE International Conference on Data Mining, 2010, pp. 995-1000, doi: 10.1109/ICDM.2010.127

In the FM-DA, the optimization unit 112 first generates initial training data including sets of the structures (shapes) and the characteristics. For example, the optimization unit 112 randomly determines the shape in the design region 203 similarly to the above-described random search, calculates the characteristic value of the structure by using the CAE solver (characteristic value calculation unit 111), and generates the training data including the sets of the structures and the characteristics. The user arbitrarily sets the number of pieces of initial training data to be generated.

Next, the optimization unit 112 generates the FM by machine learning based on the training data and converts the generated FM into the QUBO. As described in (Document 4), since the FM is in the format of the QUBO, generating the FM is equivalent to generating the QUBO. Although the case where the FM is converted into the QUBO is described as the example according to the present embodiment, a machine learning model other than the FM may be used as long as the conversion into the QUBO is able to be performed.

Next, the optimization unit 112 uses the annealing machine 5 to optimize (perform annealing on) the QUBO converted from the FM and obtains an optimum structure (whether the individual Gaussian basis functions 301 are disposed) in which the characteristic is the best (the objective function is maximized or the minimized).

For the optimum structure obtained with the annealing machine 5, the optimization unit 112 combines the disposed Gaussian basis functions 301 to obtain the shape function and identifies the structure based on the magnitude of the shape function. Next, for the identified structure, the optimization unit 112 calculates the characteristic value by using the CAE solver (characteristic value calculation unit 111) and adds the characteristic value to the training data including the sets of the structures and the characteristics.

The optimization unit 112 repeats the above-described processing related to the FM-DA until the end condition is satisfied to obtain the optimum structure (shape) in the design region 203. Examples of the end condition include a case where the maximum number of repetitions has been reached, a case where the amount of change of the objective function has not been present for a certain period of time, and so forth.

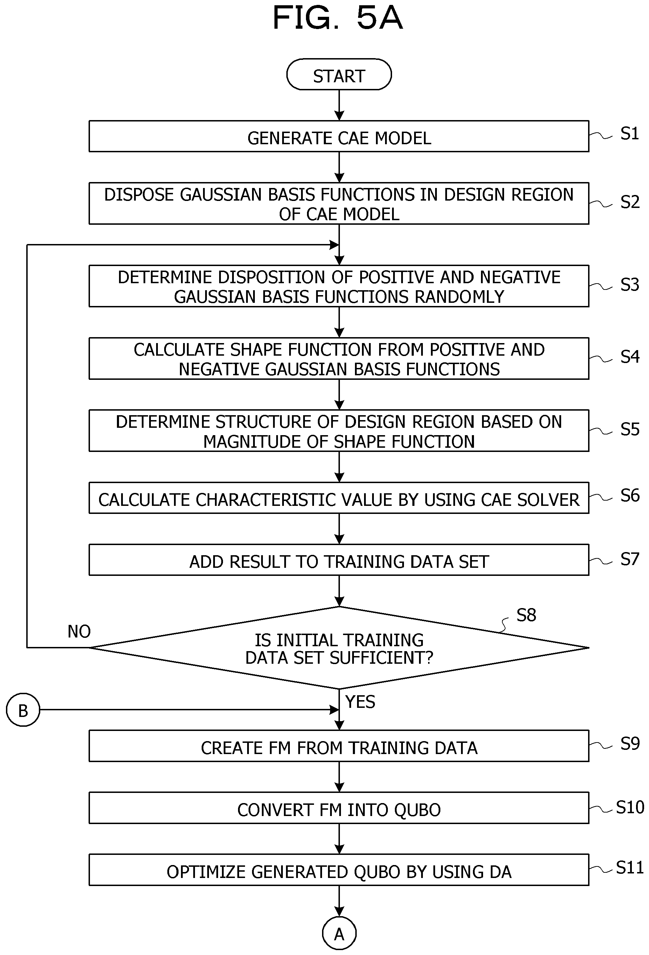

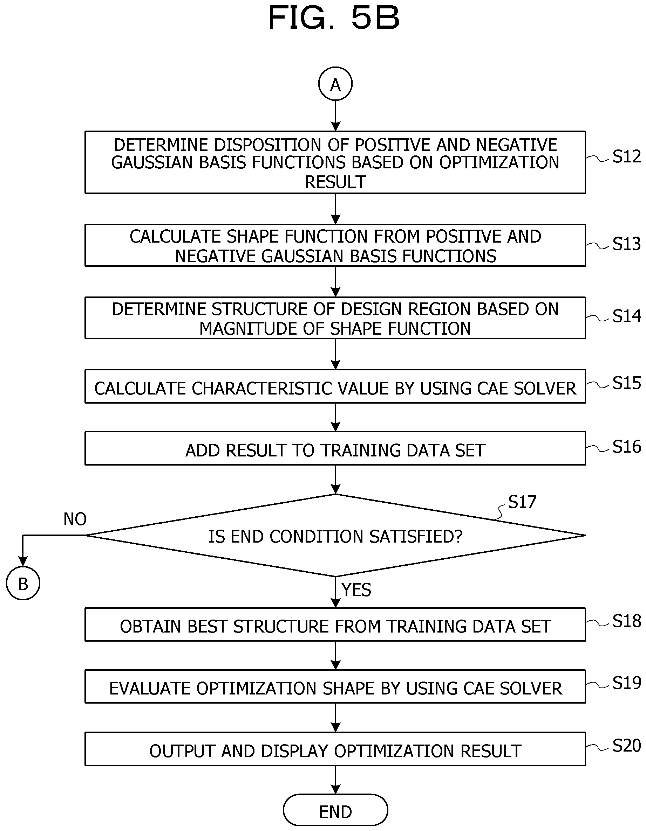

FIGs. 5A and 5B are flowcharts illustrating an example of operation of the information processing apparatus according to the embodiment. As illustrated in FIG. 5A, when the processing is started, the information processing apparatus 1 generates the CAE model to be optimized based on an instruction from the user (S1).

Next, the region setting unit 110 disposes the plurality of Gaussian basis functions 301 in the design region 203 of the CAE model (S2). Next, the optimization unit 112 randomly determines the disposition of the positive and negative Gaussian basis functions 301 (S3) and calculates the shape function by combining the disposed positive and negative Gaussian basis functions 301 (S4).

Next, the optimization unit 112 determines the structure (shape) of the design region 203 based on the magnitude of the shape function (S5) and calculates, for the determined structure, the characteristic value by using the CAE solver (characteristic value calculation unit 111) (S6). Next, the optimization unit 112 adds the calculation result (characteristic value) together with the structure (array indicating whether the Gaussian basis functions 301 are disposed) to a training data set (S7).

Next, the optimization unit 112 determines whether an initial training data set is sufficient (the number of generations set by the user is satisfied) (S8). When the initial training data set is not sufficient (S8: No), the optimization unit 112 returns the processing to S3.

In a case where the initial training data set is sufficient (S8: Yes), the optimization unit 112 creates the FM by performing the machine learning based on the training data included in the training data set (S9).

Next, the optimization unit 112 converts the created FM into the QUBO (S10) and optimizes the converted QUBO by using, for example, DA of the annealing machine 5 (S11).

Next, as illustrated in FIG. 5B, the optimization unit 112 determines whether the positive and negative Gaussian basis functions 301 are disposed based on an optimization result (S12) and calculates the shape function by using the disposed positive and negative Gaussian basis functions 301 (S13). Next, the optimization unit 112 determines the structure based on the magnitude of the shape function obtained by the calculation (S14) and calculates, for the determined structure, the characteristic value by using the CAE solver (characteristic value calculation unit 111) (S15). Next, the optimization unit 112 adds the calculation result (characteristic value) together with the structure (array indicating whether the Gaussian basis functions 301 are disposed) to the training data set (S16).

Next, the optimization unit 112 determines whether the end condition such as the case where the maximum number of repetitions has been reached or the case where the amount of change of the objective function has not been present for a certain period of time is satisfied (S17). When the end condition is not satisfied (S17: No), the optimization unit 112 returns the processing to S9 (see FIG. 5A).

When the end condition is satisfied (S17: Yes), the optimization unit 112 obtains the best structure (that maximizes or minimizes the objective function) from the training data set (S18) and evaluates the optimization shape (for example, modeling of the shape or the like) by using the CAE solver (characteristic value calculation unit 111) (S19). Next, the optimization unit 112 outputs the optimization result such as an evaluation result to the display device 4 via the communication I/F 10 and causes the display device 4 to display the optimized result (S20).

Next, comparison between (Embodiment example 1) and (Embodiment example 2) and the (Related art) according to the above-described embodiment is described. The (Embodiment example 1), the (Embodiment example 2), and the (Related art) are as follows.

(Embodiment example 1): For the design region 203, optimization of the shape by random searching with the disposition problem of 96 Gaussian basis functions 301 (192 positive and negative Gaussian basis functions 301)

(Embodiment example 2): For the design region 203, optimization of the shape by the FM-DA with the disposition problem of 96 Gaussian basis functions 301 (192 positive and negative Gaussian basis functions 301)

(Related art): For the design region 203, optimization of the shape by random searching with the number of the CAE meshes set to 4402 bits

Optimization problems set as the targets in the (Embodiment example 1), the (Embodiment example 2), and the (Related art) are optimization of the shape of a magnetic shield. For example, in the target optimization problem, the objective function of Expression (3) below that minimizes the magnitude $B^T_{ave}$ of an average magnetic flux density and a magnetic body area $S_{mag}$ in the target region 202 is obtained.

$$E = \frac{\alpha}{E_1} B_{ave}^T + \frac{\beta}{E_2} S_{mag} \to \min. \qquad \cdots (3)$$

In Expression (3), $E_1$ is one tenth of the $B_{ave}^T$ in a case where the entirety of the all design region 203 is air, and $E_2$ is $S_{mag}$ in a case where the entirety of the design region 203 is the magnetic body.

Parameters are set in the target optimization problem as follows. It is assumed that the same parameter setting is used in the (Embodiment example 1), the (Embodiment example 2), and the (Related art).

[Parameter settings] Initial point: 384 (96 × 4), Number of repetitions: 96, Total number of times of CAE calculation: 480(384 + 96) $\alpha$ = 0.5, $\beta$ = 0.5

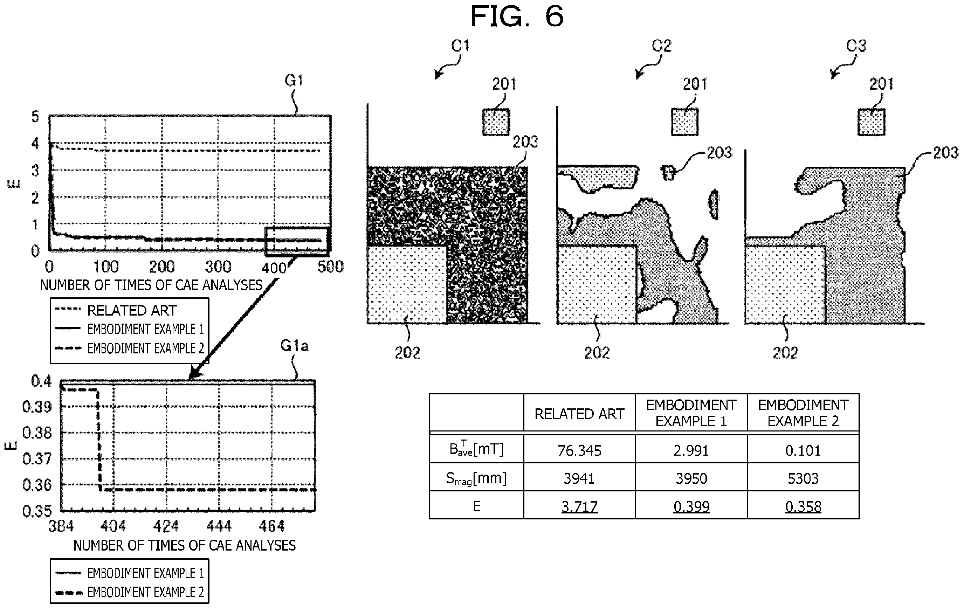

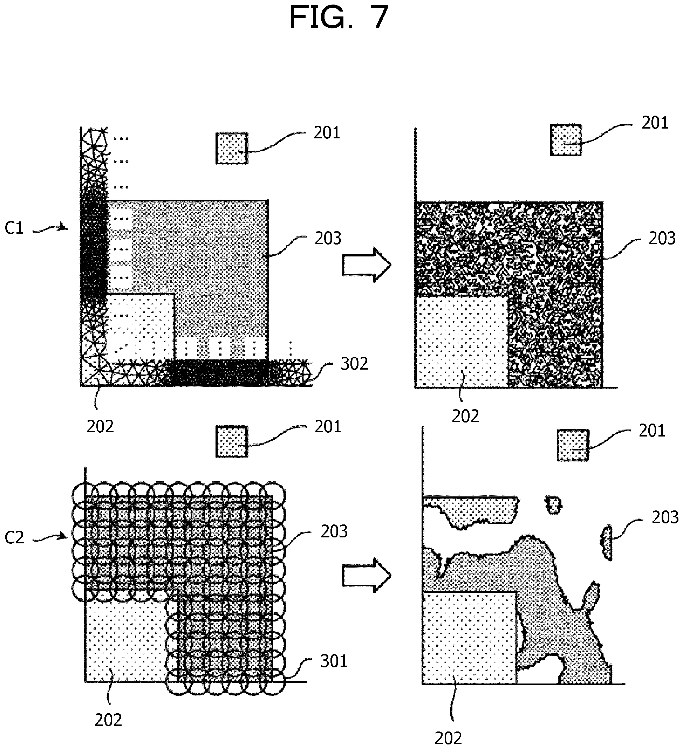

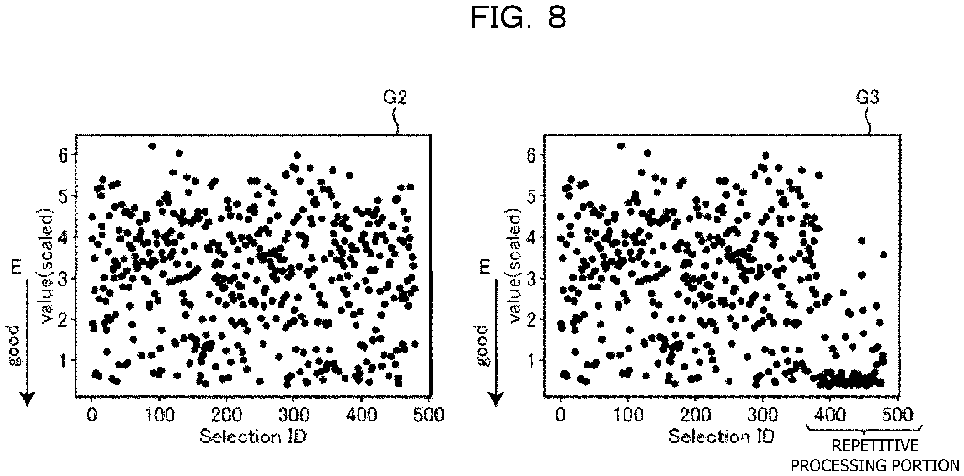

FIGs. 6 to 8 are explanatory diagrams explaining results of the related art and the embodiment examples. In FIGs. 6 and 7, case C1 indicates the result of (Related Art), case C2 indicates the result of the (Embodiment example 1), and case C3 indicates the result of the (Embodiment example 2). A graph G1 of FIG. 6 indicates the relationships between energy (E) and the number of times of CAE analyses in the (Embodiment example 1), the (Embodiment example 2) and the (related art). In FIG. 8, a graph G2 indicates a distribution of the solutions in the (Embodiment example 1), and a graph G3 indicates a distribution of the solutions in the (Embodiment example 2).

As illustrated in FIG. 6, for the same number of CAE analyses, in the (Embodiment example 1) and the (Embodiment example 2), good solutions having smaller E values than that in the (Related art) are obtained. For the annealing, 4402 bits (the number of CAE meshes in the design region 203) are used in the (Related art) whereas only 192 bits (the number of dispositions of the positive and negative Gaussian basis functions 301) are used in the (Embodiment example 1) and the (Embodiment example 2). For example, the number of bits used for the annealing may be significantly reduced in the (Embodiment example 1) and the (Embodiment example 2).

As illustrated in FIG. 7, as clearly seen from a comparison between the shape (right side) of the design region 203 in the case C1 of the (related art) and the shape (right side) of the design region 203 in the case C2 of the (Embodiment example 1), the shape is smooth in the case C2 without the occurrence of a checkerboard problem.

As illustrated in FIG. 8, compared to the graph G2 of the (Embodiment example 1), in the graph G3 of the (Embodiment example 2) using the FM-DA, the results obtained in a portion of repetitive processing are concentrated in a small region of E. For example, in the (Embodiment example 2), as in the graph G1a of FIG. 6, searching in a region where the E value is smaller is repeated, and the searching for the solution is performed more efficiently.

As has been described, the information processing apparatus 1 sets, for the design region 203, a plurality of Gaussian functions as the basis functions of the shape function corresponding to the shape of the design target item in the design region 203. The information processing apparatus 1 identifies whether to dispose the plurality of set Gaussian functions to identify the shape of the target item indicated by the shape function obtained by combining the plurality of Gaussian functions identified to be disposed.

Accordingly, the information processing apparatus 1 may perform the annealing as the disposition problem of whether to dispose the plurality of Gaussian functions. Thus, the number of bits may be significantly reduced compared to the case where the annealing is performed as the problem of whether to dispose the material in each of the CAE meshes. For this reason, with the information processing apparatus 1, convergence of the solution at the time of annealing may be improved, and the shape may be efficiently optimized. Also with the information processing apparatus 1, since the shape of the target item is identified by the shape function obtained by combining the plurality of Gaussian functions, the occurrence of the checkerboard problem in which the material is formed into a discretely disposed shape may be suppressed.

For each of the shapes in which the plurality of Gaussian functions are arbitrarily disposed, the information processing apparatus 1 generates the FM based on the training data with which the characteristic value in the shape is associated. The information processing apparatus 1 converts the generated FM into the QUBO and identifies whether to dispose the plurality of Gaussian functions by using the annealing for the converted QUBO. Accordingly, the information processing apparatus 1 may change the optimization problem into the QUBO without QUBO formulation and to identify the shape by using the annealing for the QUBO.

The information processing apparatus 1 sets a plurality of Gaussian functions of positive values and sets a plurality of Gaussian functions of negative values respectively corresponding to the Gaussian functions of positive values. As described above, the information processing apparatus 1 sets as the disposition problem of the Gaussian functions of positive values and negative values, and accordingly, the shape may be highly accurately identified compared to the case of, for example, setting as the disposition problem of only the Gaussian functions of positive values.

**Claims**

1. An optimization program that causes at least one computer to execute a process, the process comprising:

   setting, for a region of a design target, a plurality of Gaussian functions as basis functions of a shape function that corresponds to a shape of a design target item in the region; and
   identifying the shape of the design target item indicated by the shape function obtained by combining the plurality of Gaussian functions identified to be disposed by identifying whether to dispose the plurality of Gaussian functions.

2. The optimization program according to claim 1, wherein

   the plurality of Gaussian functions are arbitrary disposed in a plurality of the shapes, wherein
   the identifying includes:

   generating, for each of the shapes in which the plurality of Gaussian functions are arbitrarily disposed, a factorization machine based on training data with which a characteristic value in the shape is associated;
   converting the generated factorization machine into quadratic unconstrained binary optimization; and
   identifying whether to dispose the plurality of Gaussian functions by annealing for the converted quadratic unconstrained binary optimization.

3. The optimization program according to claim 1, wherein
   the setting includes setting a plurality of Gaussian functions of positive values and a plurality of Gaussian functions of negative values that respectively correspond to the Gaussian functions of positive values.

4. An optimization method for a computer to execute a process comprising:

   setting, for a region of a design target, a plurality of Gaussian functions as basis functions of a shape function that corresponds to a shape of a design target item in the region; and
   identifying the shape of the design target item indicated by the shape function obtained by combining the plurality of Gaussian functions identified to be disposed by identifying whether to dispose the plurality of Gaussian functions.

5. The optimization method according to claim 4, wherein

   the plurality of Gaussian functions are arbitrary disposed in a plurality of the shapes, wherein
   the identifying includes:

   generating, for each of the shapes in which the plurality of Gaussian functions are arbitrarily disposed, a factorization machine based on training data with which a characteristic value in the shape is associated;
   converting the generated factorization machine into quadratic unconstrained binary optimization; and
   identifying whether to dispose the plurality of Gaussian functions by annealing for the converted quadratic unconstrained binary optimization.

6. The optimization method according to claim 4, wherein
   the setting includes setting a plurality of Gaussian functions of positive values and a plurality of Gaussian functions of negative values that respectively correspond to the Gaussian functions of positive values.

7. An information processing apparatus comprising:
   a control unit configured to:

   set, for a region of a design target, a plurality of Gaussian functions as basis functions of a shape function that corresponds to a shape of a design target item in the region, and
   identify the shape of the design target item indicated by the shape function obtained by combining the plurality of Gaussian functions identified to be disposed by identifying whether to dispose the plurality of Gaussian functions.

8. The information processing apparatus according to claim 7, wherein

the plurality of Gaussian functions are arbitrary disposed in a plurality of the shapes, wherein the control unit is further configured to:

generate, for each of the shapes in which the plurality of Gaussian functions are arbitrarily disposed, a factorization machine based on training data with which a characteristic value in the shape is associated, convert the generated factorization machine into quadratic unconstrained binary optimization, and identify whether to dispose the plurality of Gaussian functions by annealing for the converted quadratic unconstrained binary optimization.

9. The information processing apparatus according to claim 7, wherein the control unit is further configured to: set a plurality of Gaussian functions of positive values and a plurality of Gaussian functions of negative values that respectively correspond to the Gaussian functions of positive values.

# FIG. 1

```
                                    ⌇2
┌─────────────────────────────────────┐
│            RECORDING DEVICE          │
│                              ⌇21     │
│   ┌───────────────────────────────┐  │
│   │           PROGRAM             │  │
│   └───────────────────────────────┘  │
│                              ⌇22     │
│   ┌───────────────────────────────┐  │
│   │      SETTING INFORMATION      │  │
│   └───────────────────────────────┘  │
│                              ⌇23     │
│   ┌───────────────────────────────┐  │
│   │      PROCESSING TARGET        │  │
│   │            DATA               │  │
│   └───────────────────────────────┘  │
│                              ⌇24     │
│   ┌───────────────────────────────┐  │
│   │      COMPUTATION RESULT       │  │
│   └───────────────────────────────┘  │
└─────────────────────────────────────┘
```

```
      ⌇3                    ⌇1                   ⌇4
┌──────────┐   ┌──────────────────────┐   ┌──────────┐
│  INPUT   │───│ INFORMATION PROCESSING│──│ DISPLAY  │
│  DEVICE  │   │      APPARATUS        │   │ DEVICE   │
└──────────┘   └──────────────────────┘   └──────────┘
                          ⌇5
               ┌──────────────────────┐
               │   ANNEALING MACHINE   │
               └──────────────────────┘
```

# FIG. 2

INFORMATION PROCESSING APPARATUS — 1

COMMUNICATION I/F — 10

CPU — 11

- REGION SETTING UNIT — 110
- CHARACTERISTIC VALUE CALCULATION UNIT — 111
- OPTIMIZATION UNIT — 112

RAM — 12

- PROGRAM — 21
- SETTING INFORMATION — 22
- PROCESSING TARGET DATA — 23
- COMPUTATION DATA — 24a

# FIG. 3

# FIG. 4

| s1 | s2 | s3 | s4 | ··· | s93 | s94 | s95 | s96 |
|----|----|----|----|----|-----|-----|-----|-----|
| 0  | 0  | 1  | 0  | ··· | 1   | 1   | 1   | 1   |

| z1 | z2 | z3 | z4 | ··· | z93 | z94 | z95 | z96 |
|----|----|----|----|----|-----|-----|-----|-----|
| 0  | 0  | 0  | 0  | ··· | 1   | 0   | 1   | 0   |

| w1 | w2 | w3 | w4 | ··· | w93 | w94 | w95 | w96 |
|----|----|----|----|----|-----|-----|-----|-----|
| 0  | 0  | 1  | 0  | ··· | 0   | 1   | 0   | 1   |

$s_i, z_i \in \{0,1\}$

$w_i$

$\in \{-1,0,1\}$

$V_e = \begin{cases} \text{MATERIAL PRESENT, if } y \geq 0 \\ \text{MATERIAL NOT PRESENT, else.} \end{cases}$

$i = 1\ 2\ 3\ 4 \cdots$

203

202

301

1.0e+00
0.8
0.6
0.4
0.2
0
−0.2
−0.4
−0.6
−0.8
−1.0e+00

y

# FIG. 5A

START

GENERATE CAE MODEL — S1

DISPOSE GAUSSIAN BASIS FUNCTIONS IN DESIGN REGION OF CAE MODEL — S2

DETERMINE DISPOSITION OF POSITIVE AND NEGATIVE GAUSSIAN BASIS FUNCTIONS RANDOMLY — S3

CALCULATE SHAPE FUNCTION FROM POSITIVE AND NEGATIVE GAUSSIAN BASIS FUNCTIONS — S4

DETERMINE STRUCTURE OF DESIGN REGION BASED ON MAGNITUDE OF SHAPE FUNCTION — S5

CALCULATE CHARACTERISTIC VALUE BY USING CAE SOLVER — S6

ADD RESULT TO TRAINING DATA SET — S7

IS INITIAL TRAINING DATA SET SUFFICIENT? — S8

NO

B

YES

CREATE FM FROM TRAINING DATA — S9

CONVERT FM INTO QUBO — S10

OPTIMIZE GENERATED QUBO BY USING DA — S11

A

# FIG. 5B

(A)

DETERMINE DISPOSITION OF POSITIVE AND NEGATIVE GAUSSIAN BASIS FUNCTIONS BASED ON OPTIMIZATION RESULT — S12

CALCULATE SHAPE FUNCTION FROM POSITIVE AND NEGATIVE GAUSSIAN BASIS FUNCTIONS — S13

DETERMINE STRUCTURE OF DESIGN REGION BASED ON MAGNITUDE OF SHAPE FUNCTION — S14

CALCULATE CHARACTERISTIC VALUE BY USING CAE SOLVER — S15

ADD RESULT TO TRAINING DATA SET — S16

NO

IS END CONDITION SATISFIED? — S17

(B)

YES

OBTAIN BEST STRUCTURE FROM TRAINING DATA SET — S18

EVALUATE OPTIMIZATION SHAPE BY USING CAE SOLVER — S19

OUTPUT AND DISPLAY OPTIMIZATION RESULT — S20

END

FIG. 6

# FIG. 7

# FIG. 8

EP 4 357 959 A1

Europäisches
Patentamt

European
Patent Office

Office européen
des brevets

# EUROPEAN SEARCH REPORT

Application Number

EP 23 18 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/129605 A1 (MARUO AKITO [JP] ET AL) 28 April 2022 (2022-04-28)<br>* abstract *<br>* paragraph [0011] - paragraph [0012] *<br>* paragraph [0095] - paragraph [0097]; figure 7 *<br>* paragraph [0143] - paragraph [0154] *<br>* paragraph [0087] - paragraph [0090] * | 1-9 | INV.<br>G06F30/10<br>G06F30/27 |
| A | OTOMO YOSHITSUGU ET AL: "A 3-D Topology Optimization of Magnetic Cores for Wireless Power Transfer Device",<br>IEEE TRANSACTIONS ON MAGNETICS, IEEE, USA, vol. 55, no. 6, 1 June 2019 (2019-06-01), pages 1-5, XP011724328,<br>ISSN: 0018-9464, DOI: 10.1109/TMAG.2019.2900744<br>[retrieved on 2019-05-15]<br>* abstract * | 1-9 | |
| A | STEFFEN RENDLE: "Factorization Machines",<br>DATA MINING (ICDM), 2010 IEEE 10TH INTERNATIONAL CONFERENCE ON,<br>1 December 2010 (2010-12-01), pages 995-1000, XP055562823,<br>Piscataway, NJ, USA<br>DOI: 10.1109/ICDM.2010.127<br>ISBN: 978-1-4244-9131-5<br>* abstract *<br>* Section I. Introduction; left-hand column *<br>* Section II. Optimization Method; page 2, right-hand column - page 3, left-hand column; figures 2, 3 * | 2,5 | TECHNICAL FIELDS SEARCHED (IPC)<br><br>G06F |

The present search report has been drawn up for all claims

| Place of search | Date of completion of the search | Examiner |
|---|---|---|
| Munich | 22 February 2024 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 2265

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2024

| Patent document cited in search report | Publication date | Patent family member(s) | Publication date |
|---|---|---|---|
| US 2022129605 A1 | 28-04-2022 | CN 114386211 A | 22-04-2022 |
| | | EP 3989085 A1 | 27-04-2022 |
| | | JP 2022068606 A | 10-05-2022 |
| | | US 2022129605 A1 | 28-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022068606 A

**Non-patent literature cited in the description**

- **T. SATO ; K. WATANABE ; H. IGARASHI.** Multimaterial Topology Optimization of Electric Machines Based on Normalized Gaussian Network. *IEEE Trans. Magn.,* March 2015, vol. 51 (3), 1-4
- **Y. OTOMO ; H. IGARASHI.** A 3-D Topology Optimization of Magnetic Cores for Wireless Power Transfer Device. *IEEE Trans. Magn.,* June 2019, vol. 55 (6), 1-5
- **K. KITAI et al.** *Phys. Rev. Research,* 2020, vol. 2, 013319, https://doi.org/10.1103/PhysRevResearch.2.013319
- **S. RENDLE.** Factorization Machines. *2010 IEEE International Conference on Data Mining,* 2010, 995-1000